# EUROPÄISCHE PATENTANMELDUNG

(11) **EP 2 266 869 A2**
(43) Veröffentlichungstag der Anmeldung: **29.12.2010**
(21) Anmeldenummer: 10006241.3
(22) Anmeldetag: 16.06.2010
(51) Int. Cl.: B62H 5/18

(54) **Bremsscheibenschloss mit einem schrägen Schließbolzen**

(30) Priorität: 23.06.2009 DE 102009030033
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Die Erfindung betrifft ein Bremsscheibenschloss, mit einem Schlosskörper, der einen ersten Gehäuseabschnitt und einen zweiten Gehäuseabschnitt aufweist, die in einer typischerweise U-förmigen Anordnung einen Aufnahmespalt zur Aufnahme einer Bremsscheibe begrenzen. An dem ersten Gehäuseabschnitt ist ein Schließbolzen vorgesehen, der entlang einer Schließrichtung von einer Freigabestellung in eine Schließstellung bewegbar ist. In der Schließstellung greift der Schließbolzen in eine Eingriffsöffnung des zweiten Gehäuseabschnitts ein und verschließt den Aufnahmespalt. Die Schließrichtung des Schließbolzens ist in einem von 90° verschiedenen Winkel schräg zu dem Aufnahmespalt des Schlosskörpers ausgerichtet.

## Beschreibung

Die Erfindung betrifft ein Bremsscheibenschloss, mit einem Schlosskörper, der einen ersten Gehäuseabschnitt und einen zweiten Gehäuseabschnitt aufweist, die in einer typischerweise U-förmigen Anordnung einen Aufnahmespalt zur Aufnahme einer Bremsscheibe begrenzen. An dem ersten Gehäuseabschnitt ist ein Schließbolzen vorgesehen, der entlang einer Schließrichtung von einer Freigabestellung in eine Schließstellung bewegbar ist. In der Schließstellung greift der Schließbolzen in eine Eingriffsöffnung des zweiten Gehäuseabschnitts ein und verschließt den Aufnahmespalt.

Ein derartiges Bremsscheibenschloss dient zum Sichern beispielsweise eines Motorrads, eines Motorrollers oder eines Quads gegen eine unbefugte Benutzung. Hierfür wird das Schloss derart an eine Bremsscheibe des geparkten Fahrzeugs angelegt, das die Bremsscheibe in den von den Gehäuseabschnitten gebildeten Aufnahmespalt hineinragt. Daraufhin wird der Schließbolzen derart in die Schließstellung bewegt, dass der Schließbolzen durch eine Öffnung der Bremsscheibe geführt ist. Hierdurch ist das Schloss an der Bremsscheibe gefangen, und die Benutzung des Fahrzeugs wird verhindert, bis das Schloss wieder von der Bremsscheibe gelöst wird. An dem Schlosskörper ist ein Verriegelungsmechanismus vorgesehen, durch den der Schließbolzen wahlweise verriegelt oder entriegelt werden kann.

Ein typischer Aufbruchversuch, um ein Bremsscheibenschloss mit U-förmigem Aufbau gewaltsam zu öffnen, besteht darin, einen Meißel in den Aufnahmespalt einzuschlagen, und zwar in den Zwischenraum zwischen der Bremsscheibe und dem Schlosskörper. Hierdurch sollen die U-förmige Anordnung der Gehäuseabschnitte aufgespreizt und letztlich der durch den Schließbolzen verschlossene Aufnahmespalt geöffnet werden, sodass das Schloss von der Bremsscheibe abgenommen werden kann.

Aus der DE 10 2005 043 926 A1 ist ein Bremsscheibenschloss der eingangs genannten Art bekannt. Um eine verbesserte Aufbruchsicherheit zu schaffen, insbesondere gegenüber einem Aufspreizen oder Aufstemmen der Gehäuseabschnitte durch Einwirken eines Meißels oder dergleichen, ist bei diesem Schloss der Schließbolzen - selbst wenn er sich in der Schließstellung befindet - an dem ersten Gehäuseabschnitt in Richtung des zweiten Gehäuseabschnitts versetzbar gelagert. Der Schließbolzen kann somit in seiner Schließstellung von einer Normalgebrauchslage noch weiter in Richtung des zweiten Gehäuseabschnitts gebracht werden, nämlich in eine Ausfahrposition. Wenn durch entsprechende Gewalteinwirkung der zweite Gehäuseabschnitt von dem ersten Gehäuseabschnitt des Schlosskörpers abgespreizt wird, so kann der Schließbolzen hierdurch der Bewegung des gewaltsam versetzten zweiten Gehäuseabschnitts folgen, und der Aufnahmespalt des Schlosskörpers bleibt weiterhin verschlossen. Während eine derartige Ausgestaltung sich in der Praxis bewährt hat, sind der Aufbau und die Herstellung eines solchen Bremsscheibenschlosses unerwünscht aufwändig.

Es ist eine Aufgabe der Erfindung, ein Bremsscheibenschloss mit einer verbesserten Aufbruchsicherheit zu schaffen, insbesondere gegenüber einem Aufspreizen oder Aufstemmen der Gehäuseabschnitte durch Einwirken eines Meißels oder dergleichen, wobei das Bremsscheibenschloss einen vereinfachten Aufbau besitzen soll. Ferner soll das Bremsscheibenschloss einfach zu bedienen sein.

Diese Aufgabe wird durch ein Bremsscheibenschloss mit den Merkmalen des Anspruchs 1 gelöst, und insbesondere dadurch, dass die Schließrichtung des Schließbolzens in einem von 90° verschiedenen Winkel schräg zu dem Aufnahmespalt des Schlosskörpers ausgerichtet ist.

Bei dem erfindungsgemäßen Bremsscheibenschloss verläuft die Schließrichtung des Schließbolzens nicht orthogonal zu der Erstreckungsrichtung des Aufnahmespalts bzw. zu der Erstreckungsebene einer in den Aufnahmespalt hineinragenden Bremsscheibe, sondern schräg zu einer derartigen orthogonalen Anordnung und schräg zu der Erstreckungsrichtung des Aufnahmespalts. Somit erstreckt sich das in die Eingriffsöffnung des zweiten Gehäuseabschnitts eingreifende Ende des Schließbolzens nicht orthogonal zu dem Aufnahmespalt, sondern geneigt hierzu. Hierdurch wird erreicht, dass bei einem gewaltsamen Aufspreizen oder Aufstemmen der beiden Gehäuseabschnitte das genannte Schließbolzenende sich in der Eingriffsöffnung des zweiten Gehäuseabschnitts zunehmend verkeilt, sodass ein Öffnen des Aufnahmespalts erheblich erschwert und praktisch verhindert wird. Bei einem derartigen Aufspreizen oder Aufstemmen entfernen sich die beiden Gehäuseabschnitte nämlich in einer anderen Richtung voneinander als die Richtung der schräg ausgerichteten Achse des Schließbolzens im Bereich der Eingriffsöffnung.

Im Ergebnis wird eine hohe Aufbruchsicherheit erzielt, wobei zugleich ein einfacher Aufbau des Bremsscheibenschlosses möglich ist. Insbesondere kann auch - wie nachfolgend noch erläutert wird - eine sogenannte Automatikfunktion realisiert werden, sodass sich das erfindungsgemäße Bremsscheibenschloss zusätzlich durch eine vereinfachte Handhabung auszeichnet.

Eine "schräge" Ausrichtung bezeichnet im Zusammenhang mit der vorliegenden Erfindung eine Ausrichtung in einem Winkel > 0° und < 90° relativ zu der Bezugsrichtung. Ein im Zusammenhang mit der Erfindung genannter "spitzer" Winkel bezeichnet einen Winkel > 0° und < 45°.

Gemäß einer vorteilhaften Ausführungsform ist die Schließrichtung des Schließbolzens in einem Winkel zwischen 60° und 80° schräg zu der Erstreckungsrichtung des Aufnahmespalts ausgerichtet. Das erläuterte Zusammenwirken des Schließbolzenendes mit der zugeordneten Eingriffsöffnung im Falle eines Aufbruchversuchs erfolgt hierdurch besonders wirksam, während der Schließbolzen noch problemlos durch eine Öffnung einer Bremsscheibe (insbesondere eine Belüftungsöffnung) geführt werden kann. Vorzugsweise beträgt der Winkel ca. 70°.

Weiterhin ist es von Vorteil, wenn die Eingriffsöffnung des zweiten Gehäuseabschnitts den Schließbolzen im Wesentlichen formschlüssig aufnimmt. Mit anderen Worten soll der zweite Gehäuseabschnitt das in die Eingriffsöffnung eingeführte Schließbolzenende umfänglich im Wesentlichen flächig umgeben. Auch hierdurch wird im Falle eines Aufbruchversuchs der erläuterten Art ein besonders wirkungsvolles Verkeilen des Schließbolzens an dem zweiten Gehäuseabschnitt erreicht.

Ferner ist es bevorzugt, wenn der Schließbolzen (bezogen auf seine Schließstellung) zumindest im Bereich des Aufnahmespalts des Schlosskörpers und der Eingriffsöffnung des zweiten Gehäuseabschnitts zylindrisch ausgebildet ist, d.h. der Schließbolzen ist entlang einer Längsachse langgestreckt mit einem runden Querschnitt (wobei entlang der Längsachse auch ein variierender Querschnitt vorgesehen sein kann). Hierdurch kann der Schließbolzen einen besonders einfachen Aufbau besitzen, und auch die zugeordnete Eingriffsöffnung kann als einfache zylindrische Bohrung ausgeführt sein (wobei die Achse der Bohrung entsprechend der Neigung des Schließbolzens schräg zu dem Aufnahmespalt ausgerichtet ist).

Gemäß einer weiteren vorteilhaften Ausführungsform kann an dem ersten Gehäuseabschnitt ferner ein Riegel vorgesehen sein, der entlang einer Verriegelungsrichtung von einer Entriegelungsstellung in einer Verriegelungsstellung bewegbar ist, um den Schließbolzen in der Schließstellung zu verriegeln. Ein besonders kompakter Aufbau des ersten Gehäuseabschnitts und somit des Schlosskörpers sowie eine einfache Zugänglichkeit eines mit dem Riegel zusammenwirkenden Schließzylinders werden erreicht, wenn die Verriegelungsrichtung des Riegels schräg zu der genannten Schließrichtung des Schließbolzens ausgerichtet ist. Hierbei kann die Verriegelungsrichtung des Riegels schräg oder parallel zu der Erstreckungsrichtung des Aufnahmespalts des Schlosskörpers ausgerichtet sein.

Wie bereits erwähnt, kann für das Bremsscheibenschloss eine sogenannte Automatikfunktion vorgesehen sein, um eine besonders einfache Handhabung zu erzielen. Hierfür ist der Riegel mittels einer Feder in Richtung der Verriegelungsstellung vorgespannt, in welcher der Riegel den Schließbolzen in dessen Schließstellung zu verriegeln vermag. Durch Bewegen des Schließbolzens aus der Freigabestellung in die Schließstellung kann der Schließbolzen somit automatisch in der Schließstellung verriegelt werden. Um den Riegel wahlweise aus der Verriegelungsstellung in die Entriegelungsstellung zurückbewegen zu können, ist an dem ersten Gehäuseabschnitt ein Schließzylinder vorgesehen, der mittels eines zugeordneten Schlüssels betätigt werden kann und mit dem Riegel über eine Mitnehmereinrichtung zusammenwirkt. Aufgrund des erläuterten Verkeilens des Schließbolzens in der zugeordneten Eingriffsöffnung im Fall eines Aufbruchversuchs kann eine derartige Automatikfunktion ohne Beeinträchtigung der Aufbruchsicherheit realisiert werden. Insbesondere ist es beispielsweise nicht erforderlich, dass der Schließbolzen um seine Längsachse gedreht wird und über zusätzliche Verkrallungsansätze oder dergleichen mit der Eingriffsöffnung zusammenwirkt, wie dies aus der eingangs genannten DE 10 2005 043 926 A1 bekannt ist.

Für eine derartige Ausgestaltung ist es bevorzugt, wenn der Schließbolzen mittels einer weiteren Feder in Richtung der Freigabestellung vorgespannt ist. Durch Zurückziehen des Riegels aus der Verriegelungsstellung in die Entriegelungsstellung wird der Schließbolzen somit automatisch in die Freigabestellung bewegt.

Die Erfindung wird nachfolgend lediglich beispielhaft unter Bezugnahme auf die Zeichnungen erläutert.
- Fig. 1: zeigt eine teilweise aufgeschnittene Perspektivansicht eines Bremsscheibenschlosses.
- Fig. 2: zeigt eine teilweise aufgeschnittene Seitenansicht des Bremsscheibenschlosses.
- Fig. 3: zeigt eine vergrößerte Seitenansicht eines Halterings des Bremsscheibenschlosses.

Das in den Figuren gezeigte Bremsscheibenschloss kann an einer Bremsscheibe eines Motorrads oder dergleichen festgelegt werden, um dieses gegen eine unbefugte Benutzung zu sichern. Hierfür besitzt das Bremsscheibenschloss einen Schlosskörper 11 aus Metall. Der Schlosskörper 11 umfasst einen ersten Gehäuseabschnitt 13 und einen zweiten Gehäuseabschnitt 15, die über einen Verbindungsabschnitt 17 einstückig miteinander verbunden sind und die in einer im Wesentlichen U-förmigen Anordnung einen Aufnahmespalt 19 zur Aufnahme einer Bremsscheibe begrenzen. Der Aufnahmespalt 19 erstreckt sich zwischen den beiden Gehäuseabschnitten 13, 15 geradlinig entlang einer Erstreckungsrichtung X.

An dem ersten Gehäuseabschnitt 13 ist ein Schließbolzenkanal 21 ausgebildet, in dem ein Schließbolzen 23 axial beweglich gelagert ist. Der Schließbolzen 23 besteht aus Metall und ist im Wesentlichen zylindrisch, d.h. er erstreckt sich geradlinig und besitzt einen runden Querschnitt. An dem dem zweiten Gehäuseabschnitt 15 abgewandten Ende besitzt der Schließbolzen 23 eine aus dem Schlosskörper 11 herausragende Betätigungskappe 25. An diesem Ende des Schließbolzens 23 ist der Schließbolzenkanal 21 mittels eines Verschlussrings 27 verschlossen, der den Schließbolzen 23 umfänglich umgibt und der mittels eines Sicherungsrings 29 an dem Schlosskörper 11 fixiert ist.

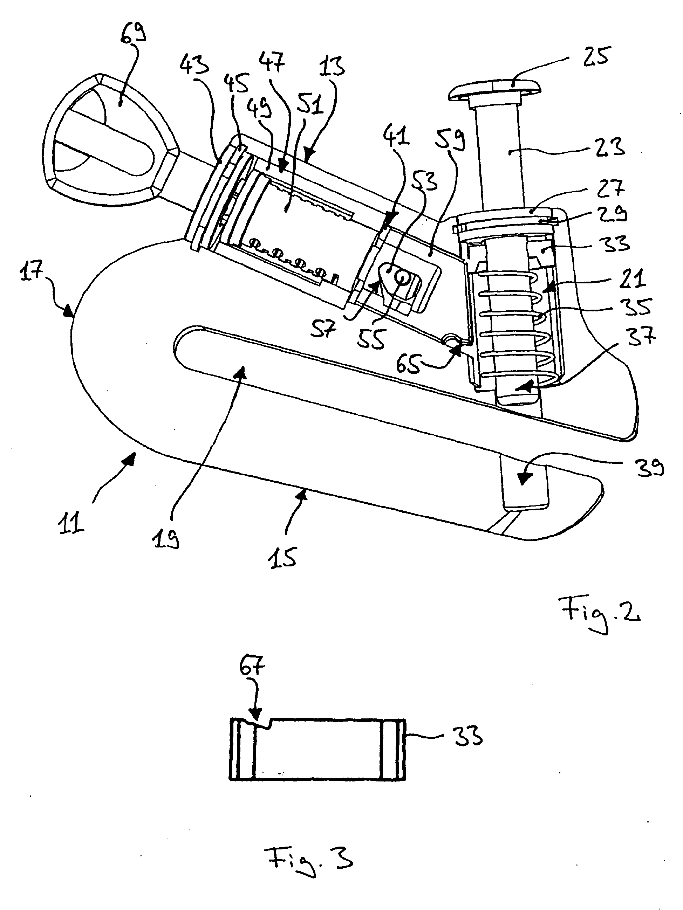

Ungefähr auf halber Höhe ist an dem Schließbolzen 23 mittels eines Befestigungsstifts 31 ein Haltering 33 fixiert (vgl. auch Seitenansicht gemäß Fig. 3). Innerhalb des Schließbolzenkanals 21 befindet sich ferner eine erste Druckfeder 35, die den Schließbolzen 23 umgibt. Die erste Druckfeder 35 stützt sich einerseits an dem Boden des Schließbolzenkanals 21 und andererseits an der Unterseite des Halterings 33 ab. Die erste Druckfeder 35 spannt somit den Schließbolzen 23 entgegen einer Schließrichtung Y in Richtung einer Freigabestellung vor.

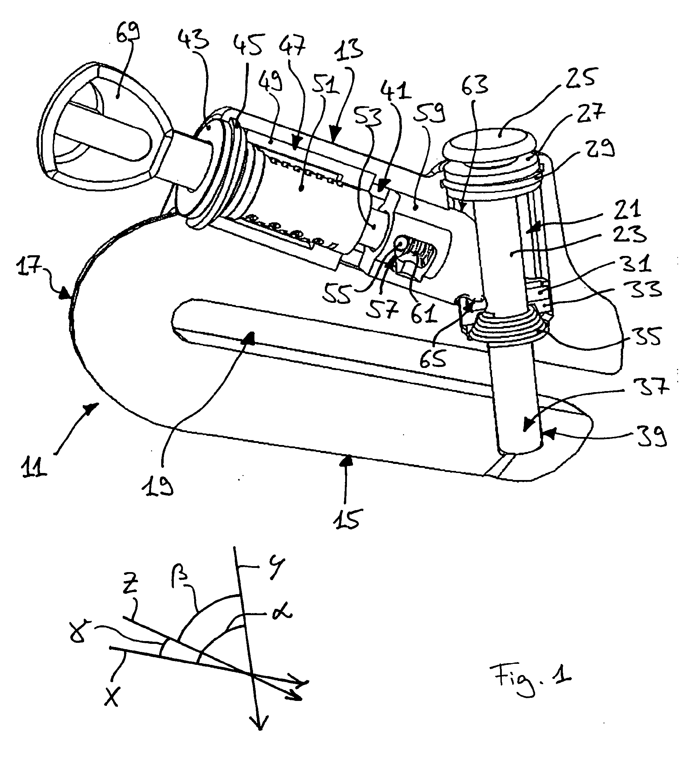

Fig. 1 zeigt eine Schließstellung des Schließbolzens 23, während Fig. 2 die genannte Freigabestellung zeigt. In der Schließstellung greift das dem zweiten Gehäuseabschnitt 15 zugewandte Ende 37 des Schließbolzens 23 in eine Eingriffsöffnung 39 des zweiten Gehäuseabschnitts 15 ein. Hierdurch verschließt der Schließbolzen 23 den Aufnahmespalt 19. Die Eingriffsöffnung 39 ist zylindrisch, sodass die Eingriffsöffnung 39 das ebenfalls zylindrische Schließbolzenende 37 formschlüssig aufnimmt. In der Schließstellung des Schließbolzens 23 gemäß Fig. 1 verbleibt zwischen dem Schließbolzenende 37 und der Eingriffsöffnung 39 des zweiten Gehäuseabschnitts 15 demnach nur ein geringer Ringspalt.

Eine Besonderheit des gezeigten Bremsscheibenschlosses besteht darin, dass die Schließrichtung Y des Schließbolzens 23 (d.h. die Längsachse des zylindrischen Schließbolzens 23) in einem von 90° verschiedenen Winkel α schräg zu der Erstreckungsrichtung X des Aufnahmespalts 19 ausgerichtet ist. Hierbei ist das der Eingriffsöffnung 39 abgewandte Ende des Schließbolzens 23 in Richtung des geschlossenen Endes des Aufnahmespalts 19 (d.h. in Richtung des Verbindungsabschnitts 17) geneigt. Bei dem hier gezeigten Ausführungsbeispiel beträgt der Winkel α 70°.

In dem ersten Gehäuseabschnitt 13 des Schlosskörpers 11 ist ferner ein Riegelkanal 41 ausgebildet, der in den Schließbolzenkanal 21 mündet. Der Riegelkanal 41 ist nach außen durch einen Verschlussring 43 verschlossen, der mittels eines Sicherungsrings 45 an dem Schlosskörper 11 fixiert ist. Innerhalb des Riegelkanals 41 befindet sich ein Schließzylinder 47, der ein ortsfestes Zylindergehäuse 49 und einen drehbaren Zylinderkern 51 umfasst. An einem Mitnehmerfortsatz 53 des Zylinderkerns 51 befindet sich ein Mitnehmerstift 55. Dieser wirkt mit einer Kulisse 57 eines axial beweglichen Riegels 59 zusammen. Der Riegel 59 ist mittels einer zweiten Druckfeder 61 ausgehend von einer Entriegelungsstellung gemäß Fig. 2 entlang einer Verriegelungsrichtung Z in Richtung einer Verriegelungsstellung gemäß Fig. 1 vorgespannt. In der Verriegelungsstellung ragt der Riegel 59 in den Schließbolzenkanal 21 hinein, um den Schließbolzen 23 in der Schließstellung zu verriegeln. Die genannte Verriegelungsrichtung Z des Riegels 59 und die Schließrichtung Y des Schließbolzens 23 schließen einen Winkel β ein, und mit der Erstreckungsrichtung X des Aufnahmespalts 19 des Schlosskörpers 11 schließt die Verriegelungsrichtung Z des Riegels 59 einen spitzen Winkel γ ein. Die Erstreckungsrichtung X des Aufnahmespalts 19, die Schließrichtung Y des Schließbolzens 23 und die Verriegelungsrichtung Z des Riegels 59 liegen innerhalb einer gemeinsamen Ebene.

An seiner dem Schließbolzenkanal 21 zugewandten Vorderseite besitzt der Riegel 59 eine Auflaufschräge 63. Ferner besitzt der Riegel 59 an seiner Vorderseite eine Eingriffsnase 65, die mit einer Eingriffsvertiefung 67 des Halterings 33 (vgl. Fig. 3) zusammenwirkt, um einen Rastschluss zwischen dem Riegel 59 und den Schließbolzen 23 zu bewirken, wenn der Schließbolzen 23 sich in der Schließstellung befindet und der Riegel 59 sich in der Verriegelungsstellung befindet.

Nachfolgend wird die Funktionsweise sowie des gezeigten Bremsscheibenschlosses erläutert.

Ausgehend von der Freigabestellung des Schließbolzens 23 gemäß Fig. 2 wird das Bremsscheibenschloss derart auf eine Bremsscheibe aufgesetzt, dass sich eine Öffnung der Bremsscheibe zwischen dem Schließbolzenkanal 21 des ersten Gehäuseabschnitts 13 und der Eingriffsöffnung 39 des zweiten Gehäuseabschnitts 15 befindet. Durch Drücken der Betätigungskappe 25 kann der Schließbolzen 23 nun entgegen der Vorspannung (erste Druckfeder 35) entlang der Schließrichtung Y in die Schließstellung gemäß Fig. 1 bewegt werden, bis das Schließbolzenende 37 vollständig in die Eingriffsöffnung 39 eingreift. Der Schließbolzen 23 wird hierbei geradlinig entlang seiner Längsachse ohne zusätzliche Drehbewegung um seine Längsachse bewegt. Der bis zu diesem Zeitpunkt von dem Haltering 33 in den Riegelkanal 41 zurückgedrängte Riegel 59 kann nun aufgrund seiner Vorspannung (zweite Druckfeder 61) entlang der Verriegelungsrichtung Z derart in die Verriegelungsstellung gemäß Fig. 1 schnappen, dass der Riegel 59 in den Schließbolzenkanal 21 eingreift und den Schließbolzen 23 hierdurch in der Schließstellung sichert. Sofern nun der Schließbolzen 23 losgelassen wird, kann dieser aufgrund der Vorspannung (erste Druckfeder 35) gerade so weit aus der zuvor eingenommenen Stellung zurückweichen, dass die Eingriffsnase 65 des Riegels 59 in die Eingriffsvertiefung 67 des Halterings 33 eingreift, um den bereits genannten Rastschluss zu bilden.

Es ist zu beachten, dass aufgrund des Zusammenwirkens des federvorgespannten Schließbolzens 23 mit dem ebenfalls federvorgespannten Riegel 59 eine Automatikfunktion realisiert ist. Mit anderen Worten muss der Benutzer - um das Bremsscheibenschloss an der Bremsscheibe festzulegen - lediglich den Schließbolzen 23 vollständig in die Schließstellung drücken, ohne dass hierbei eine Betätigung des Schließzylinders 47 erforderlich ist. Wie erläutert, ist hierbei auch keine Drehbewegung des Schließbolzens 23 erforderlich, sondern dieser wird entlang der Schließrichtung Y rein translatorisch bewegt.

Um das Bremsscheibenschloss wieder von der Bremsscheibe zu lösen, ist es erforderlich, den Schließbolzen 23 von der Schließstellung gemäß Fig. 1 zurück in die Freigabestellung gemäß Fig. 2 zu bringen. Hierfür wird der Schließzylinder 47 mittels eines zugeordneten Schlüssels 69 im Öffnungssinn drehbetätigt. Hierdurch wirkt der Mitnehmerstift 55 mit der Kulisse 57 (Fig. 1) derart zusammen, dass der Riegel 59 entgegen der erläuterten Federvorspannung (zweite Druckfeder 61) in die Entriegelungsstellung gemäß Fig. 2 zurückgezogen wird. Zu Beginn dieser Bewegung wird der Haltering 33 mitsamt Schließbolzen 23 kurzzeitig entlang der Schließrichtung Y gedrängt, um ein Lösen der Eingriffsnase 65 des Riegels 59 aus der Eingriffsvertiefung 67 des Halterings 33 zu ermöglichen (Aufheben des genannten Rastschlusses). Sobald der Riegel 59 auf diese Weise vollständig aus den Schließbolzenkanal 21 bewegt ist, kann der Schließbolzen 23 aufgrund seiner Vorspannung (erste Druckfeder 35) in die Freigabestellung gemäß Fig. 2 schnappen. Der Schlüssel 69 kann nun wieder in die Ausgangsposition zurückgedreht und entnommen werden. Der an der Vorderseite des Riegels 59 anliegende Haltering 33 hält in diesem Zustand den in Richtung der Verriegelungsstellung vorgespannten Riegel 59 zurück.

Ein besonderer Vorteil des gezeigten Bremsschlosses besteht in der erläuterten Schrägstellung der Achse des Schließbolzens 23 und der zugeordneten Eingriffsöffnung 39 (Schließrichtung Y) relativ zu der Erstreckungsrichtung X des Aufnahmespalts 19 des Schlosskörpers 11. Sofern nämlich bei einem Aufbruchversuch die beiden Gehäuseabschnitte 13, 15 des Schlosskörpers 11 durch Aufspreizen oder Aufstemmen auseinander bewegt werden, verhindert das hierzu schräg ausgerichtete Schließbolzenende 37 ein Aufweiten des Aufnahmespalts 19 an dessen offenem Ende, da die Bewegungsrichtung der beiden Gehäuseabschnitte 13, 15 relativ zueinander (die im Wesentlichen senkrecht zu der Richtung X verläuft) und die Bewegungsrichtung des Schließbolzens 23 relativ zu der Eingriffsöffnung 39 (Schließrichtung Y) nicht zusammenfallen. Letztlich führt ein Aufspreizen oder Aufstemmen der beiden Gehäuseabschnitte 13, 15 also zu einem Verkeilen des Schließbolzens 23 in der Eingriffsöffnung 39, sodass ein vollständiges Öffnen des Aufnahmespalts und somit ein unbefugtes Lösen des Bremsscheibenschlosses von der Bremsscheibe verhindert oder zumindest erheblich erschwert werden.

Dieses Verkeilen des Schließbolzens 23 an dem zweiten Gehäuseabschnitt 15 kann, wie erläutert, bei einer Automatikfunktion des Bremsscheibenschlosses verwirklicht werden, wodurch sich ein hoher Bedienungskomfort ergibt. Ferner kann der Schließbolzen 23 im Wesentlichen rotationssymmetrisch ausgebildet sein und in dem ersten Gehäuseabschnitt 13 ohne zusätzliche Drehbewegung geführt sein, wobei das Schließbolzenende 37 im Falle eines Aufbruchversuchs dennoch an dem zweiten Gehäuseabschnitt 15 festgelegt ist. Hierdurch besitzt das Bremsscheibenschloss also auch einen vorteilhaft einfachen Aufbau und kann entsprechend kostengünstig hergestellt werden (z.B. im Wesentlichen stabförmiger Schließbolzen 23).

Aufgrund der Schrägstellung des Riegelkanals 41 (spitzwinklige oder parallele Ausrichtung des Schlüsselkanals des Schließzylinders 47 relativ zu der Erstreckungsrichtung X des Aufnahmespalts 19) ergibt sich eine kompakte Bauweise des Bremsscheibenschlosses.

Aufgrund des erläuterten Rastschlusses des Riegels 59 mit dem Haltering 33 des Schließbolzens 23 kann der Riegel 59 nicht durch gezielte Schläge auf den Schlosskörper 11 kurzzeitig aus der Verriegelungsstellung in die Entriegelungsstellung bewegt werden, um den Schließbolzen 23 unbefugt in die Freigabestellung zu bringen. Durch den Eingriff der Eingriffsnase 65 in die Eingriffsvertiefung 67 wird also ein Schutz gegen die sogenannte "Hammerschlagmethode" erzielt.

### Bezugszeichenliste

- 11: Schlosskörper
- 13: erster Gehäuseabschnitt
- 15: zweiter Gehäuseabschnitt
- 17: Verbindungsabschnitt
- 19: Aufnahmespalt
- 21: Schließbolzenkanal
- 23: Schließbolzen
- 25: Betätigungskappe
- 27: Verschlussring
- 29: Sicherungsring
- 31: Befestigungsstift
- 33: Haltering
- 35: erste Druckfeder
- 37: Schließbolzenende
- 39: Eingriffsöffnung
- 41: Riegelkanal
- 43: Verschlussring
- 45: Sicherungsring
- 47: Schließzylinder
- 49: Zylindergehäuse
- 51: Zylinderkern
- 53: Mitnehmerfortsatz
- 55: Mitnehmerstift
- 57: Kulisse
- 59: Riegel
- 61: zweite Druckfeder
- 63: Auflaufschräge
- 65: Eingriffsnase
- 67: Eingriffsvertiefung
- 69: Schlüssel

- X: Erstreckungsrichtung des Aufnahmespalts
- Y: Schließrichtung des Schließbolzens
- Z: Verriegelungsrichtung des Riegels

- α: Winkel zwischen X und Y
- β: Winkel zwischen Z und Y
- γ: Winkel zwischen Z und X

## Patentansprüche

1. Bremsscheibenschloss, mit einem Schlosskörper (11), der einen ersten Gehäuseabschnitt (13) und einen zweiten Gehäuseabschnitt aufweist (15), die einen Aufnahmespalt (19) zur Aufnahme einer Bremsscheibe begrenzen, wobei an dem ersten Gehäuseabschnitt (13) ein Schließbolzen (23) vorgesehen ist, der entlang einer Schließrichtung (Y) von einer Freigabestellung in eine Schließstellung bewegbar ist, wobei der Schließbolzen (23) in der Schließstellung in eine Eingriffsöffnung (39) des zweiten Gehäuseabschnitts (15) eingreift und den Aufnahmespalt (19) verschließt,
**dadurch gekennzeichnet, dass**
die Schließrichtung (Y) des Schließbolzens (23) in einem von 90° verschiedenen Winkel (α) schräg zu dem Aufnahmespalt (19) des Schlosskörpers (11) ausgerichtet ist.

2. Bremsscheibenschloss nach Anspruch 1,
wobei die Schließrichtung (Y) des Schließbolzens (23) in einem Winkel (a) zwischen 60° und 80°, insbesondere in einem Winkel von ca. 70° schräg zu dem Aufnahmespalt (19) ausgerichtet ist.

3. Bremsscheibenschloss nach Anspruch 1 oder 2,
wobei das der Eingriffsöffnung (39) abgewandte Ende des Schließbolzens (23) in Richtung des geschlossenen Endes des Aufnahmespalts (19) geneigt ist.

4. Bremsscheibenschloss nach einem der vorhergehenden Ansprüche,
wobei die Eingriffsöffnung (39) des zweiten Gehäuseabschnitts (15) den Schließbolzen (23) im Wesentlichen formschlüssig aufnimmt.

5. Bremsscheibenschloss nach einem der vorhergehenden Ansprüche,
wobei der Schließbolzen (23) bezogen auf seine Schließstellung zumindest im Bereich des Aufnahmespalts (19) und der Eingriffsöffnung (39) des zweiten Gehäuseabschnitts (15) zylindrisch ausgebildet ist.

6. Bremsscheibenschloss nach einem der vorhergehenden Ansprüche,
wobei der Schließbolzen (23) von der Freigabestellung in die Schließstellung ohne zusätzliche Drehbewegung um seine Längsachse bewegbar ist.

7. Bremsscheibenschloss nach einem der vorhergehenden Ansprüche,
wobei der Schließbolzen (23) mittels einer ersten Feder (35) in Richtung der Freigabestellung vorgespannt ist.

8. Bremsscheibenschloss nach einem der vorhergehenden Ansprüche,
wobei an dem ersten Gehäuseabschnitt (13) ferner ein Riegel (59) vorgesehen ist, der entlang einer Verriegelungsrichtung (Z) von einer Entriegelungsstellung in eine Verriegelungsstellung bewegbar ist, wobei der Riegel (59) in der Verriegelungsstellung den Schließbolzen (23) in der Schließstellung verriegelt und wobei der Riegel (59) in der Entriegelungsstellung den Schließbolzen (23) für eine Bewegung in die Freigabestellung freigibt.

9. Bremsscheibenschloss nach Anspruch 8,
wobei die Verriegelungsrichtung (Z) des Riegels (59) schräg zu der Schließrichtung (Y) des Schließbolzens (23) ausgerichtet ist.

10. Bremsscheibenschloss nach Anspruch 9, wobei an dem ersten Gehäuseabschnitt (13) des Schlosskörpers (11) ein Schließzylinder (47) vorgesehen ist, der mit dem Riegel (59) zusammenwirkt, wobei der Schließzylinder (47) entsprechend der Verriegelungsrichtung (Z) des Riegels (59) schräg zu der Schließrichtung (Y) des Schließbolzens (23) ausgerichtet ist.

11. Bremsscheibenschloss nach einem der Ansprüche 8 bis 10, wobei die Verriegelungsrichtung (Z) des Riegels (59) schräg oder parallel zu dem Aufnahmespalt (19) ausgerichtet ist.

12. Bremsscheibenschloss nach Anspruch 11, wobei an dem ersten Gehäuseabschnitt (13) des Schlosskörpers (11) ein Schließzylinder (47) vorgesehen ist, der mit dem Riegel (59) zusammenwirkt, wobei der Schließzylinder (47) entsprechend der Verriegelungsrichtung (Z) des Riegels (59) schräg oder parallel zu dem Aufnahmespalt (19), insbesondere spitzwinklig zu dem Aufnahmespalt (19) ausgerichtet ist.

13. Bremsscheibenschloss nach einem der Ansprüche 8 bis 12, wobei der Riegel (59) mittels einer zweiten Feder (61) in Richtung der Verriegelungsstellung vorgespannt ist, wobei an dem ersten Gehäuseabschnitt (13) ein Schließzylinder (47) mit einer Mitnehmereinrichtung (53, 55) vorgesehen ist und wobei der Riegel (59) mittels der Mitnehmereinrichtung (53, 55) wahlweise aus der Verriegelungsstellung in die Entriegelungsstellung bewegbar ist.

14. Bremsscheibenschloss nach einem der Ansprüche 8 bis 13,
wobei der Riegel (59) an dem Schließbolzen (23) verrastet ist, wenn der Schließbolzen sich in der Schließstellung befindet und der Riegel sich in der Verriegelungsstellung befindet.

15. Bremsscheibenschloss nach einem der Ansprüche 1 bis 12, wobei der Schließbolzen (23) mittels einer ersten Feder (35) in Richtung der Freigabestellung vorgespannt ist,
wobei an dem ersten Gehäuseabschnitt (13) ferner ein Riegel (59) vorgesehen ist, der entlang einer Verriegelungsrichtung (Z) von einer Entriegelungsstellung in eine Verriegelungsstellung bewegbar ist, wobei der Riegel (59) in der Verriegelungsstellung den Schließbolzen (23) in der Schließstellung verriegelt und wobei der Riegel (59) in der Entriegelungsstellung den Schließbolzen (23) für eine Bewegung in die Freigabestellung freigibt,
wobei der Riegel (59) mittels einer zweiten Feder (61) in Richtung der Verriegelungsstellung vorgespannt ist, wobei an dem ersten Gehäuseabschnitt (13) ein Schließzylinder (47) mit einer Mitnehmereinrichtung (53, 55) vorgesehen ist und wobei der Riegel (59) mittels der Mitnehmereinrichtung (53, 55) wahlweise aus der Verriegelungsstellung in die Entriegelungsstellung bewegbar ist, und
wobei der Riegel (59) an dem Schließbolzen (23) verrastet ist, wenn der Schließbolzen sich in der Schließstellung befindet und der Riegel sich in der Verriegelungsstellung befindet.
